# FASCICULE DE BREVET EUROPEEN

(11) **EP 3 927 449 B1**
(45) Date de publication et mention de la délivrance du brevet: **20.08.2025**
(21) Numéro de dépôt: 20710576.8
(22) Date de dépôt: 12.02.2020
(51) Int. Cl.: B01D 53/04, B01D 53/047

(54) **PROCÉDÉ ET INSTALLATION DE PURIFICATION D'UN FLUX GAZEUX DE DÉBIT ÉLEVÉ**
VERFAHREN UND ANLAGE ZUR REINIGUNG EINES GASSTROMS MIT HOHEM DURCHFLUSS
METHOD AND FACILITY FOR PURIFYING A HIGH-FLOW GAS STREAM

(30) Priorité: 21.02.2019 FR 1901734
(43) Date de publication de la demande: 29.12.2021
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: DAVIDIAN, Benoit, 94503 Champigny-Sur-Marne (FR); MONEREAU, Christian, 94503 CHAMPIGNY SUR MARNE (FR)
(74) Mandataire: Air Liquide
(86) Numéro de dépôt international: PCT/FR2020/050252
(87) Numéro de publication internationale: WO 2020/169899

(56) Documents cités:
- DE-U1- 9 100 168
- FR-A1- 2 767 716
- FR-A1- 2 981 280
- JP-B2- 3 065 534
- US-A1- 2012 058 017

## Description

L'invention porte sur un procédé et une installation de purification en basse pression d'un flux gazeux de débit élevé, c'est-à-dire de quelques milliers à quelques dizaines de milliers de Nm³/h. Plus particulièrement, cela concerne la purification d'un gaz à travers un lit de garde ou la séparation / épuration d'un fluide gazeux par un cycle TSA, voire dans quelques cas par des cycles PSA quasi-isobares.

Dans tous ces cas, on met en œuvre un phénomène d'adsorption, que ce phénomène soit réversible (physisorption) ou irréversible (chimisorption).

De manière générale, un procédé par adsorption en phase gazeuse permet de séparer une ou plusieurs molécules d'un mélange gazeux les contenant, en exploitant la différence d'affinité d'un ou plusieurs adsorbants pour les différentes molécules constitutives du mélange. L'affinité d'un adsorbant pour une molécule dépend d'une part de la structure et la composition de l'adsorbant et d'autre part des propriétés de la molécule, en particulier sa taille, sa structure électronique et ses moments multipolaires. Un adsorbant peut être par exemple une zéolite, un charbon actif, une alumine activée éventuellement dopée, un gel de silice, un tamis moléculaire carboné, une structure métallo-organique, un oxyde ou hydroxyde de métaux alcalins ou alcalino-terreux, ou une structure poreuse contenant de préférence une substance capable de réagir avec les molécules, substance telle que amines, solvants physique, complexants métalliques, oxydes ou hydroxydes métalliques par exemple.

Les matériaux adsorbants les plus classiques sont sous forme de particules (billes, bâtonnets, concassés...) mais existent également sous forme structurée tels les monolithes, roues, contacteurs à passages parallèle, tissus, fibres...

On peut distinguer 3 grandes familles de procédé par adsorption : les procédés à charge perdue, les procédés TSA (Température Swing Adsorption) et enfin les procédés PSA (Pressure Swing Adsorption).

Dans les procédés à charge perdue - on parle souvent dans ce cas de lit de garde- on met en place une nouvelle charge lorsque celle en cours d'utilisation est saturée par les impuretés ou plus généralement quand elle ne peut plus jouer son rôle de protection de manière suffisante. Contrairement aux procédés régénératifs (TSA, PSA), le matériau de la charge peut fixer les impuretés de façon irréversible.

Dans les procédés de type TSA, l'adsorbant en fin d'utilisation est régénéré in situ, c'est-à-dire que les impuretés arrêtées sont évacuées afin que le dit adsorbant récupère l'essentiel de ses capacités d'adsorption et puisse recommencer un cycle d'épuration, l'effet de régénération essentiel étant dû à une élévation de température.

Enfin, dans les procédés de type PSA, l'adsorbant en fin de phase de production est régénéré par la désorption des impuretés obtenue au moyen d'une baisse de leur pression partielle. Cette baisse de pression peut être obtenue par une baisse de la pression totale et/ ou par balayage avec un gaz exempt ou contenant peu d'impuretés. C'est seulement ce dernier cas qui nous intéresse ici dans le domaine des PSA. Il s'agit alors plus précisément d'un transfert d'un constituant d'un fluide dans un autre de débit équivalent, voire plus important. Il peut s'agir par exemple de la récupération d'un produit à haute valeur économique contenu dans un gaz résiduaire que l'on transfère dans un gaz procédé. Les pressions d'adsorption et de régénération peuvent alors être voisines.

Un lit de garde est simplement traversé par le fluide à épurer. Pour utiliser au mieux le matériau actif, celui-ci est souvent logé dans deux adsorbeurs fonctionnant en série, le second contenant la zone frontale alors que le premier est quasiment saturé. Avant que l'impureté ne perce, on aura remplacé la charge du premier adsorbeur par une charge neuve et inversé par un jeu de vannes l'ordre de circulation dans les adsorbeurs. Ainsi, on utilise au mieux le matériau actif.

Classiquement, un cycle de procédé TSA comporte les étapes suivantes :
a) Purification/séparation du fluide à pression super-atmosphérique et à température ambiante par circulation à travers la masse adsorbante,
b) Dépressurisation de l'adsorbeur jusqu'à la pression atmosphérique,
c) Régénération de l'adsorbant par circulation d'un gaz réchauffé jusqu'à une température comprise habituellement entre 60 et 250°C au moyen d'un échangeur généralement du type réchauffeur électrique ou réchauffeur à vapeur,
d) Refroidissement à température ambiante de l'adsorbant, notamment en continuant à y introduire ledit gaz de régénération non réchauffé,
e) Repressurisation de l'adsorbeur avec le gaz à épurer/séparer ou par le gaz traité.

Des étapes additionnelles à celles décrites plus haut peuvent être rajoutées, comme une étape de mise en parallèle des deux adsorbeurs, de durée plus ou moins longue, c'est-à-
dire de quelques secondes à plusieurs minutes ou bien une étape d'attente sans
circulation de fluides à travers l'adsorbant par exemple en fin d'étape de régénération. Généralement, les TSA comprennent deux adsorbeurs, fonctionnant de manière alternée, c'est-à-dire que l'un des adsorbeurs est en phase de production pendant que l'autre est en phase de régénération. De nombreuses autres configurations peuvent être utilisées selon les applications (pluralité d'adsorbeurs, régénération en boucle fermée ou semi-fermée, chauffage et refroidissement en série sur différents adsorbeurs...). Ces choix de réalisation ne font pas partie des caractéristiques qui sont propres à la présente invention et qui, quant à elles, vont être explicitées plus bas.

La pression facilitant l'arrêt des impuretés, au moins dans le cas de physisorption, l'unité de purification est très généralement installée sur un gaz qui a été préalablement comprimé. Par exemple, à ce jour, l'épuration de l'air destiné à être fractionné dans une unité cryogénique se fait presque exclusivement sous pression bien qu'un certain nombre de variantes aient été proposées. Le cycle cryogénique le plus utilisé est le cycle « double colonne » (conventional dual column cycle) dans lequel l'air est comprimé à une seule pression qui correspond, aux pertes de charge près, à la pression de fonctionnement de la colonne dite moyenne pression, c'est-à-dire, très généralement entre 4.5 et 6 bar abs. L'épuration s'effectue très généralement à cette pression.

En effet, la mise en œuvre d'un procédé d'adsorption en basse pression -autour de la pression atmosphérique- pose un certain nombre de problèmes par rapport à un procédé en moyenne ou haute pression (>10 bar abs). La masse adsorbante à mettre en jeu est sensiblement plus élevée du fait des pressions partielles des impuretés sensiblement plus faibles et par là, des capacités d'adsorption également sensiblement plus faibles. Les pertes de charge sont également sensiblement plus importantes à même géométrie et l'énergie consommée correspondante peut être suffisamment élevée pour rendre le procédé envisagé inefficace. On comprendra que ces problèmes sont d'autant plus gênant que les débits de fluides en jeu sont importants.

Différentes solutions ont donc été proposées pour remédier à ces inconvénients.

Une première tendance de fond a été de développer des adsorbeurs présentant un frein minimum à la circulation des fluides. L'utilisation de l'adsorbant en couche mince et avec une grande section de passage est une des solutions généralement retenues quel que soit le type d'adsorbeur (cylindrique à axe vertical,à axe horizontal, radial...) mais un tel choix a des inconvénients.

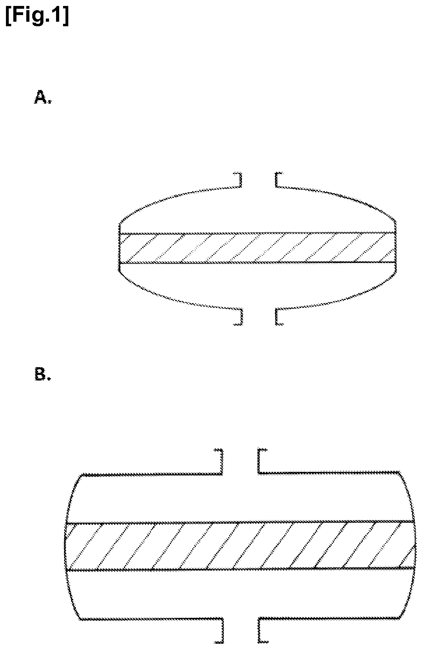

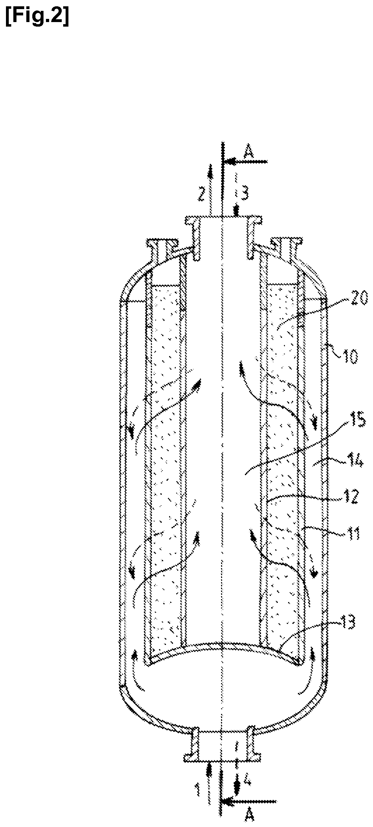

Comme représenté schématiquement sur la [Fig. 1], une telle disposition entraine d'important volumes morts de part et d'autre du volume d'adsorbant. Les schémas 1.a, b représentent respectivement des adsorbeurs cylindriques à axe vertical, horizontal . La [Fig. 2] représente quant à elle un adsorbeur radial. Les volumes d'adsorbant lorsqu'ils sont utilisés en couches minces ne représentent qu'une fraction du volume interne total de l'adsorbeur, généralement moins de 50%. Cette fraction a tendance à diminuer lorsqu'on augmente la taille des adsorbeurs. Une partie de ces volumes morts est nécessaire pour assurer une bonne distribution des fluides à travers le volume adsorbant. Cela impose également des tolérances de remplissage particulièrement faibles afin d'avoir des couches d'adsorbant de même épaisseur et de même densité (ou même taux de vide) quel que soit le trajet des fluides à travers l'adsorbant, afin d'éviter tout bipasse qui viendrait polluer la production avant la fin de l'étape d'épuration.

On notera que dans le cas des lits radiaux, on peut obtenir grâce à la mise en œuvre des grilles cylindriques concentriques des épaisseurs de lits pratiquement identiques aux tolérances de fabrication près. Par contre dans le cas d'adsorbeurs cylindrique à axe vertical ou horizontal, il convient d'avoir des surfaces libres bien planes après remplissage et de s'assurer qu'elles restent ainsi en opération. Sur des sections pouvant dépasser 10 m2, cela nécessite des procédures adéquates.

Si le remplissage des adsorbeurs cylindriques peut se faire de façon relativement efficace et homogène du fait de leur géométrie, il n'en est pas toujours de même avec les lits radiaux pour lesquels il faut généralement utiliser des équipements développés spécialement à cet effet et/ou prévoir des équipements amovibles en partie supérieure.

Une dernière approche pour diminuer les pertes de charge, c'est-à-dire en définitive pour avoir une grande section de passage pour les fluides et des épaisseurs de lit faibles consiste à fractionner la masse d'adsorbant correspondant à un adsorbeur en plusieurs sous-systèmes fonctionnant en parallèle.

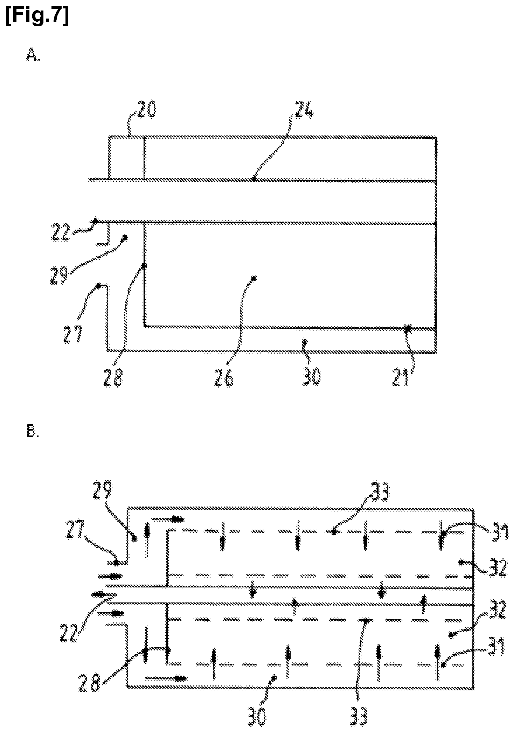

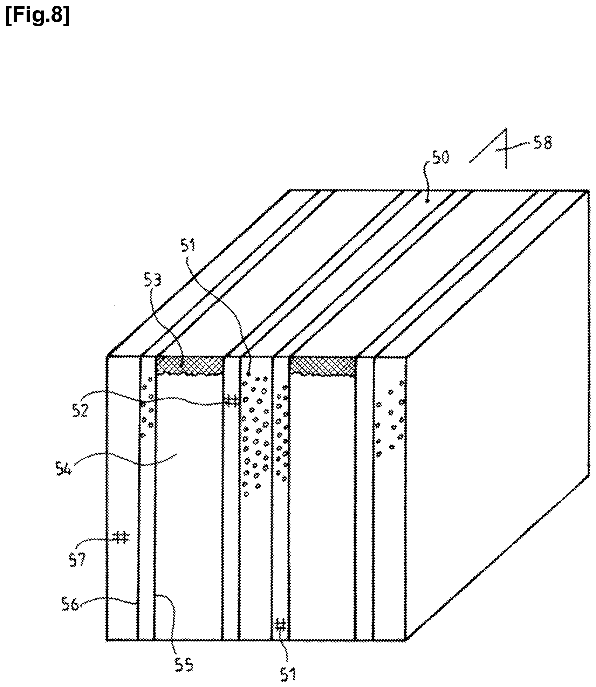

Plusieurs possibilités se présentent alors. La masse adsorbante est fractionnée mais se situe dans une même enceinte résistant à la pression. Les [Fig. 7] et [Fig. 8] du document EP 2 752 232 illustrent ce cas. Une virole cylindrique renferme deux lits d'adsorbant identiques de part et d'autre d'une zone centrale servant ici à l'entrée du gaz , la moitié de ce gaz après épuration, sortant latéralement vers chacun des lits. Une telle disposition permet de doubler environ la section de passage, de diminuer la largeur des lits mais crée du fait de la géométrie des défauts de distribution peu compatibles avec les performances demandées à une épuration d'air avant séparation cryogénique.

On peut également mettre en œuvre une pluralité de modules identiques connectés entre eux et fonctionnant de ce fait comme un seul et même adsorbeur.

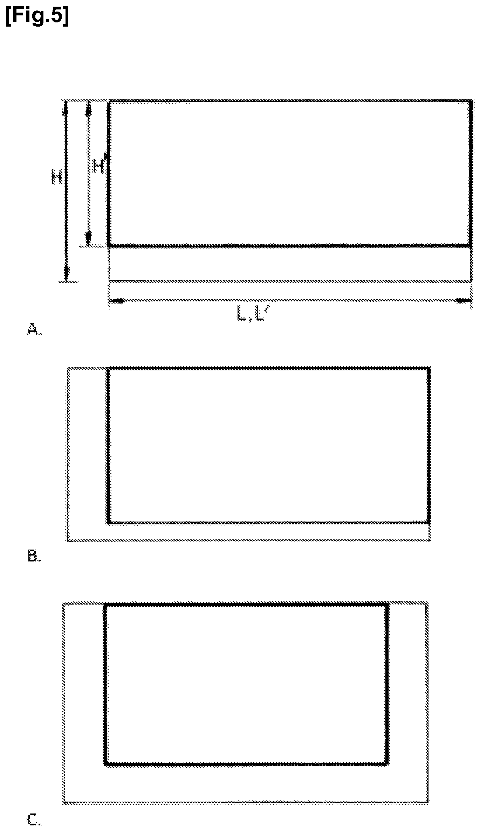

A titre d'exemple, on peut se référer à la [Fig.5] du document US 9,358,496 B2 qui correspond à un arrangement encore plus complexe. Un adsorbeur est constitué par deux modules connectés en parallèle par des tubulures en Y. On notera que chaque module consiste en 4 sous modules eux-mêmes installés en parallèle entre tubulure d'entrée et tubulure de sortie.

Cela se traduit par un investissement relativement élevé pour cette épuration à cause du volume de l'enveloppe et, lorsqu'une bonne distribution des fluides est requise à travers des lits de faible épaisseur, des dispositifs adéquats à prévoir. Il y a donc eu de nombreux développements pour tenter de réduire ce coût, en particulier des propositions pour utiliser des unités d'épuration à pression atmosphérique avec une technologie d'adsorbeurs différente. On peut citer par exemple, dans le domaine de l'épuration d'air le document US 2005/0217481 qui décrit un système utilisant une technologie rendue possible par la basse pression, celle des roues adsorbantes (Low Pressure Rotary Adsorbent Contactors). Quand on cherche à obtenir l'arrêt quasi complet des impuretés (ultra high purity), il convient d'utiliser 3 dispositifs en série.

Une des raisons de la nécessité de multiplier le nombre de roues vient du fait que la charge en kg d'adsorbant par m3 de matériau constitutif de la roue est faible en comparaison de ce qu'on réalise dans un adsorbeur classique.

Toujours en utilisant la technologie des roues adsorbantes, il a été imaginé de mettre en série, un système rotatif destiné à enlever une fraction des impuretés suivi d'une épuration classique pour enlever les impuretés résiduelles. On peut alors citer le document US 2017/0216760 qui appliqué à un VPSA, décrit un tel système double.

FR2981280 divulgue une unité d'adsorption à lit parallélépipédique pour la séparation des fumées dans la capture du CO2.

En définitive, il n'existe actuellement pas de procédé universel pour épurer ou séparer un flux gazeux de débit important en basse pression.

La présente invention va alors permettre de façon avantageuse de couvrir au moins une partie des épurations de ce type.

Une solution de l'invention est une installation de purification par adsorption d'un flux gazeux comprenant au moins un adsorbeur présentant une enveloppe de forme parallélépipèdique disposée horizontalement et comprenant :
- une entrée et une sortie du flux gazeux,
- deux masses adsorbantes en lit fixe présentant chacune une forme également parallélépipédique dont les faces sont parallèles aux faces de l'enveloppe, et
- un ensemble de volumes permettant que la traversée des deux masses adsorbantes par le flux gazeux s'effectue horizontalement, en parallèle, dans des sens opposés, sur toute la section de chacune des masses adsorbantes et sur toutes leurs épaisseurs,
l'ensemble des volumes comprenant :
a) une partie interne comprenant :
   un premier volume V1 d'introduction et de distribution ou de récupération de fluides ;
   un deuxième volume V2 et un troisième volume V3 comprenant chacun une masse adsorbante et situés de part et d'autre du premier volume V1 ; et
b) une partie libre comprenant deux volumes libres V4 et V5 d'introduction et de distribution ou de récupération de fluides compris de part et d'autre de la partie interne et entre la partie interne et l'enveloppe de l'adsorbeur,

la partie interne étant disposée de façon symétrique par rapport au plan médian de l'enveloppe de l'adsorbeur,
la partie interne présentant un fond inférieur plein ou un fond supérieur plein et le premier volume V1, le deuxième volume V2 et le troisième volume V3 présentent des parois verticales fixées de façon étanche à la paroi supérieure de l'enveloppe de l'adsorbeur ou au fond supérieur plein et à la paroi inférieure de l'enveloppe de l'adsorbeur ou au fond inférieur plein,
l'ensemble de volumes comprenant, entre la paroi inférieure de l'enveloppe de l'adsorbeur et le fond inférieur plein, un espace en communication fluidique avec les volumes libres V4 et V5,
   ou,
l'ensemble de volumes comprenant, entre la paroi supérieure de l'enveloppe de l'adsorbeur et le fond supérieur plein, un espace en communication fluidique avec les volumes libres V4 et V5.

Selon une réalisation, le deuxième volume V2 et le troisième volume V3 présentent chacun plusieurs adsorbants et les parois verticales séparant les différents adsorbants sont fixés de la même manière à la paroi supérieure de l'enveloppe de l'adsorbeur ou au fond supérieur plein et à la paroi inférieure de l'enveloppe de l'adsorbeur ou au fond inférieur plein.

Dans la suite de la présente demande on notera L la longueur de l'adsorbeur, H sa hauteur et l sa largeur. La section de la masse adsorbante a aussi pour longueur L et pour hauteur H.

Par lits fixes, on entend ici que l'adsorbant, qu'il soit sous forme de particules (billes, bâtonnet, granulé, plaquettes...) ou d'adsorbant structuré comme par exemple de monolithe, est immobile dans une enveloppe elle-même immobile. On veut exclure par là toute solution où l'adsorbant est mobile et en particulier tout système rotatif de type roue ou barillet (procédé dans lequel ce sont les enveloppes contenant l'adsorbant qui sont mobiles).

Un autre point essentiel selon l'invention est le fait que les flux gazeux circulent de façon horizontale à travers la masse adsorbante. Cette dernière peut ainsi être maintenue entre deux parois verticales poreuses aux gaz pour lesquelles les tolérances sur l'écartement peuvent être très faibles. On peut ainsi obtenir ainsi des épaisseurs de lit très minces et très homogènes. Comme déjà signalé, il est pratiquement impossible d'arriver à ce niveau de précision avec un lit d'adsorbant plat présentant une grande surface libre.

Notons également que la forme parallélépipédique de l'enveloppe de l'adsorbeur permet un remplissage dense et homogène de chaque adsorbeur sans avoir à utiliser de système complexe de remplissage.

L'installation selon l'invention permet de traiter un flux gazeux présentant un débit élevé, et de manière économe en énergie car n'induisant que de très faibles pertes de charge.

Selon le cas, l'installation selon l'invention peut présenter une ou plusieurs des caractéristiques ci-dessous :
- les masses adsorbantes suivent un cycle TSA ou PSA ou sont à charge perdue. Par « charge perdue » on entend une charge qui ne subit pas de régénération. Dans le cas de masses adsorbantes à charge perdue on parlera également de lit de garde.
- le deuxième volume V2 et le troisième volume V3 comprennent chacun au moins deux sous-volumes adjacents comprenant des adsorbants différents ; avec l'ensemble des adsorbants disposé de façon symétrique par rapport au plan médian de l'adsorbeur. De préférence, les différents adsorbants sont séparés par des parois verticales (H'*L') poreuses aux fluides.
- le premier volume V1, le deuxième volume V2 et le troisième volume V3 présentent des parois verticales fixées de façon étanche à au moins une paroi latérale de l'enveloppe de l'adsorbeur.
- le premier volume V1, le deuxième volume V2 et le troisième volume V3 présentent des parois verticales fixées de façon étanche à au moins une plaque pleine parallèle à une paroi latérale de l'enveloppe de l'adsorbeur.
- l'ensemble de volumes comprend, entre la plaque pleine et une paroi latérale de l'enveloppe de l'adsorbeur, un espace en communication fluidique avec les volumes libres V4 et V5.
- le deuxième volume V2 et le troisième volume V3 renfermant la masse adsorbante comportent sur toute la longueur de leur extrémité supérieure un système destiné à éviter la pollution potentielle locale du gaz épuré liée à un bipasse ou à un sur débit local ou à un défaut de régénération si régénération il y a.
- l'enveloppe de l'adsorbeur comprend des moyens permettant d'introduire et/ou d'extraire les différents fluides en circulation dans le premier volume V1 les volumes libres V4 et V5 ; ces moyens seront de préférence situés sur une même face (H*I) ;
- le premier volume V1 comprend un filtre permettant de traiter le flux épuré, ce filtre étant préférentiellement autonettoyant c'est-à-dire étant traversé à contre-courant par le gaz de régénération, si gaz de régénération il y a.
- le parallélépipède que forme l'enveloppe de l'adsorbeur a une longueur comprise entre 3 et 12 mètres, une hauteur H comprise entre 1 et 3 mètres et une largeur l comprise entre 1 et 3 mètres.
- le parallélépipède que forme l'enveloppe de l'adsorbeur est contenu dans un conteneur ISO ou dans une structure conforme aux normes ISO relatives aux conteneurs et qui comporte les systèmes de préhension également conformes à ces normes ISO.
- au moins une partie de la structure du conteneur sert directement de structure pour l'adsorbeur.

Notons que l'installation selon l'invention peut comprendre plusieurs adsorbeurs fonctionnant en parallèle.

La présente invention a également pour objet un procédé de purification par adsorption d'un flux gazeux mettant en œuvre une installation selon l'invention et comprenant :
- une étape de purification du flux gazeux par la traversée en parallèle des deux masses adsorbantes de l'adsorbeur par ledit flux gazeux ; et
- une étape de régénération de l'adsorbeur par la traversée en parallèle des deux masses adsorbantes de l'adsorbeur par un flux de régénération ; ou
- une étape de remplacement d'au moins une partie des deux masses adsorbantes de l'adsorbeur.

Notons que par « purification » on peut notamment entendre la captation d'un constituant tel que le CO2 ou les gaz rares.

Le procédé de l'invention mettant en oeuvre un seul adsorbeur tel que décrit ici peut par exemple permettre de maintenir l'atmosphère d'une enceinte essentiellement close dans laquelle est produit, plus ou moins en continu, au moins un constituant X dont la teneur maximale acceptable Ym peut être relativement faible (inférieur au % par exemple) et qu'il convient donc d'extraire du système.

Il peut s'agir concernant ledit constituant X du CO2 rejeté lors de la respiration d'un groupe d'individus, l'enceinte pouvant être alors l'intérieur d'un sous-marin ou un abri hermétiquement isolé. Il peut s'agir d'émanations issues de peinture, de vernis, de revêtements divers, l'enceinte pouvant être alors un immeuble possédant une recirculation d'air. Il peut plus généralement s'agir de rejets divers dès lors que l'enceinte est essentiellement close (hangar de stockage de fruits, serre...). La solution de base est d'effectuer une purge, en continu ou de façon cyclique de façon à éliminer vers l'extérieur le constituant X et de maintenir ainsi une atmosphère dont la teneur en X sera inférieure à Ym. On conçoit qu'une telle purge peut être très défavorable au système dans le cas d'un sous-marin ou d'une cabine spatiale mais elle peut être également délicate et coûteuse dans de nombreux cas car s'accompagnant d'une perte d'énergie (enceinte chauffée ou réfrigérée) ou de constituants que l'on souhaite conserver dans l'enceinte (teneur élevée en CO2 dans certaines serres, additifs favorisant la conservation de produits...).

La solution selon l'invention va consister dans ces cas à faire circuler une fraction du gaz de l'enceinte, généralement de l'air contenant le constituant X à rejeter vers l'extérieur à travers les deux masses adsorbantes de l'adsorbeur. L'adsorbant retenu sera sélectif vis à vis de cette impureté, par exemple de l'alumine activée dopée si l'on veut retirer du CO2 d'une atmosphère humide, de gel de silice ou du charbon actif s'il s'agit de composés organiques volatils...On utilisera généralement un simple ventilateur pour faire circuler la fraction de gaz à épurer, la technologie utilisée permettant alors d'effectuer cette épuration avec une perte de charge minimale de l'ordre de quelques dizaines de millibar, voire moins. Dans certains cas, grâce à la faible résistance de l'épuration vis à vis du passage du fluide, on utilisera à cette fin, le ventilateur normalement nécessaire pour homogénéiser l'atmosphère dans l'enceinte Cette phase d'adsorption se continuera jusqu'à charger l'adsorbant en constituant X. Pour les applications envisagées, on peut effectivement aller jusqu'à la percée du constituant X dans le gaz en circulation, voire jusqu'à la saturation de l'adsorbant. Une fois cet état obtenu, on envoie un front de chaleur dans l'adsorbant qui va permettre de désorber rapidement le constituant X. La fraction alors produite est très enrichie en X, mettons 10 fois en moyenne sur la durée de cette étape, et évacuée vers l'extérieur. Par simple bilan, il apparaît que l'on ne va perdre de la sorte que 10 % du gaz que l'on perdrait avec une simple purge pour éliminer la même quantité de produit indésirable. L'étape de chauffage peut s'effectuer à co-courant de la phase d'épuration permettant d'obtenir une unité d'épuration très simple comprenant en série un ventilateur (éventuellement celui servant à homogénéiser l'atmosphère ou à aspirer de l'air atmosphérique en cas de purge), un élément chauffant à l'arrêt ou en service (éventuellement celui qui servirait à maintenir un certain niveau de température dans l'enceinte), un adsorbeur selon l'invention et en sortie un dispositif renvoyant le fluide à l'intérieur de l'enceinte ou vers le milieu extérieur suivant l'étape du procédé. Les détails de la mise en œuvre et en particulier les débits et durées respectifs pendant épuration et évacuation (chauffage), adsorbant, niveau de température...dépendent du système envisagé et sont à adapter au cas par cas.

De façon plus générale, l'adsorbeur selon l'invention peut être utilisé pour fractionner un fluide à pression voisine de la pression atmosphérique renfermant N constituants (N>1) A, B, C...N de teneurs respectives Ya, Yb, Yc...Yn en 2 ou plusieurs fluides de teneurs respectives Y1a, Y1b, Y1n..., Y2a, Y2b,Y2n ,etc...obtenus successivement en sortie dudit adsorbeur en modifiant cycliquement sa température d'entrée (et éventuellement le débit de fluide en entrée). Là également, tout l'intérêt de cette application vient du fait que grâce à la technologie utilisée mettant en oeuvre de grandes sections de passage et des faibles épaisseurs, la traversée des masses adsorbantes, même en basse pression est peu coûteuse en énergie pour un investissement limité.

Selon le cas, le procédé selon l'invention peut présenter une ou plusieurs des caractéristiques suivantes :
- l'étape d'épuration est réalisée à une pression comprise entre 0.95 bar abs et 1.2 bar abs, préférentiellement entre 1.0 bar abs et 1.15 bar abs.
- il met en œuvre une installation telle que définie précédemment et à l'étape de purification le flux gazeux est introduit dans les deux volumes libres V4 et V5 et le flux gazeux épuré est soutiré du volume V1.
- il met en œuvre une installation telle que définie précédemment et à l'étape de purification le flux gazeux est introduit dans l'espace en communication fluidique avec les volumes libres V4 et V5 et le flux gazeux épuré est soutiré du volume V1.
- il met en œuvre une installation telle que définie précédemment et à l'étape de régénération le flux de régénération est introduit dans le volume V1 puis soutiré dans les deux volumes libres V4 et V5.
- il met en œuvre une installation telle que définie précédemment et à l'étape de régénération le flux de régénération est introduit dans le volume V1 puis soutiré dans l'espace en communication fluidique avec les volumes libres V4 et V5.

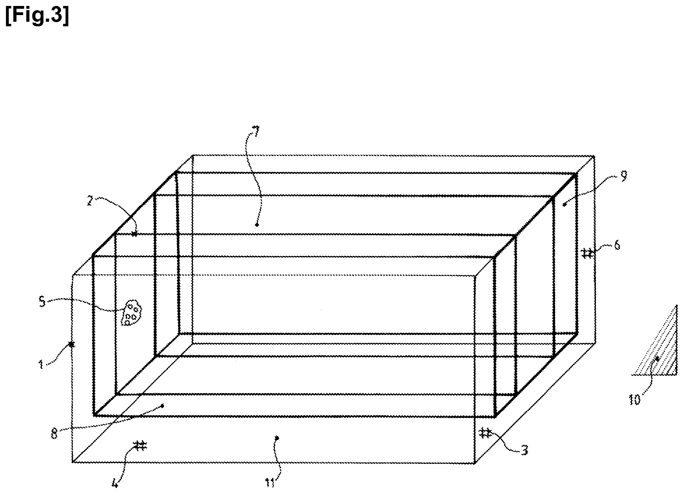

La [Fig. 3] illustre un exemple d'un arrangement des différents volumes (volumes libres, volumes d'adsorbant) selon l'invention. L'enveloppe externe de l'adsorbeur 1 a été représentée en traits minces alors que le partie interne 2, arbitrairement, en traits épais. Par " essentiellement la forme d'un parallélépipède '', on veut signifier que l'enveloppe de l'adsorbeur et la partie interne ont en pratique leurs six faces planes et ont l'aspect d'un parallélépipède avec des faces à angle droit mais qu'il peut y avoir des renforts, localement au moins une couche d'isolant interne ou externe, et évidemment les tubulures ou boîtes d'introduction et de soutirage du gaz à épurer et du gaz de régénération. L'adsorbeur étant posé à plat sur le sol dans sa position opératoire, on appelle L sa grande longueur, l sa largeur et H sa hauteur. Dans le cadre de l'invention, le fait qu'il s'agisse de dimensions extérieures ou intérieures n'a pas d'importance.

On définit donc chacun des parallélépipèdes mis en œuvre par ses 3 dimensions, à savoir H*L*l pour l'enveloppe externe de l'adsorbeur et H'*L'*l'pour la partie interne. Les faces horizontales, plancher et plafond, sont donc repérées par leurs dimensions L*l et L'*l' (repère 3 par exemple). Les faces verticales de plus grande dimension sont respectivement repérées H*L et H'*L'(repère 4 par exemple). Pour la partie interne, ces faces H'*L'sont poreuses aux fluides (repère 5 par exemple). Les autres faces verticales de plus petite dimension sont alors notées H*l et H'*l' (repère 6 par exemple).

Le parallélépipède H'*L'*l'constituant la partie interne est lui-même divisé en 3 sous volumes, tous de forme parallélépipédique. Le volume central V17 est un volume libre destiné à la circulation des fluides. De part et d'autre de V1 se trouvent les masses adsorbantes logées dans les 2 parallélépipèdes V2 et V3 8 et 9. La partie interne est symétrique par rapport à son plan médian vertical qui est représenté schématiquement à droite du croquis de l'adsorbeur et repéré 10. Ce plan médian 10 est également le plan médian de l'enveloppe de l'adsorbeur. C'est donc l'adsorbeur dans son ensemble qui possède un plan de symétrie 10. Chacune des masses adsorbantes va traiter de la sorte 50% du débit de gaz à épurer et être régénérée par 50% du débit de gaz de régénération, si gaz de régénération il y a (cas d'un TSA ou d'un PSA). La circulation de tous les fluides à travers l'adsorbant se fait horizontalement par les faces H'*L'qui sont les seules poreuses. Cette circulation se fait du volume libre central V1 de la partie interne vers les volumes libres V4 et V5 de l'enveloppe (repère 11 par exemple) et vice-versa.

Dans l'arrangement retenu pour la figure 3, la partie interne a la même longueur que l'enveloppe (L'=L) mais de hauteur moindre (H'<H). Ladite partie interne a sa face supérieure accolée à la face supérieure de l'enveloppe, c'est-à-dire que leur plafond est commun. Il existe donc un espace entre le plancher de la partie interne et celui de l'enveloppe qui met en communication fluidique les volumes libres V4 et V5, l'ensemble constituant alors le volume libre de l'enveloppe. Il s'agit là d'une des configurations possibles entre enveloppe et partie interne. D'autres possibilités seront décrites ultérieurement. La [Fig.3] n'est donc qu'un exemple non limitatif de la configuration possible de l'adsorbeur selon l'invention choisi pour expliquer le principe de réalisation.

Selon une variante, le deuxième volume V2 et le troisième volume V3 de la partie interne comportent chacun une pluralité N (N compris entre 1 et 4, préférentiellement N=2) de sous volumes adjacents, chacun de ces volumes pouvant contenir un adsorbant de caractéristique différente, l'ensemble de ces adsorbants étant disposé de façon symétrique par rapport au plan médian de l'adsorbeur. Très généralement, les différents adsorbants sont séparés par des parois verticales (H'*L') poreuses aux fluides qui les maintiennent et empêchent leur mélange. On notera cependant qu'il est possible de mettre en place les différents adsorbants avec une paroi mobile que l'on lève progressivement au cours du remplissage et qui est, suivant le cas, retirée ou laissée en place à la fin.

Dans l'hypothèse d'une épuration d'air, on utilisera par exemple un premier adsorbant destiné à retirer la grande majorité de l'eau et éventuellement une partie du CO2 (alumine activée, gel de silice, alumine dopée...) et un deuxième adsorbant destiné à retirer le CO2 restant, les oxydes d'azote et certains hydrocarbures (zéolites X, préférentiellement échangée particulièrement au calcium et/ou baryum). On peut tout aussi bien mettre un lit unique (alumine dopée, zéolite X) ou 3 lits successifs (par exemple alumine, zéolite X, zéolite échangée).

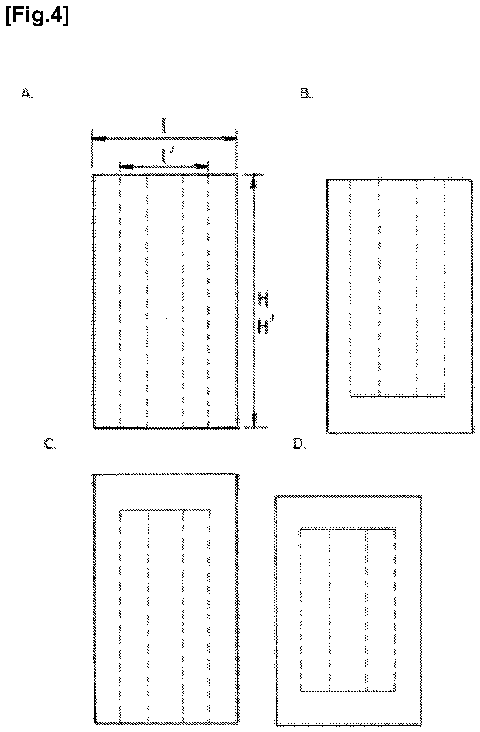

Dans une première configuration ne faisant pas partie de l'invention, schématisée par la coupe 4.a de la [Fig. 4] (qui est une vue de côté de l'adsorbeur coupé verticalement en son milieu), l'adsorbeur est réalisé de telle façon que les parois verticales (H'*L') relatives aux volumes adsorbant sont fixées, en haut et en bas, de façon étanche respectivement à la paroi supérieure et à la paroi inférieure de l'enveloppe de l'adsorbeur. Cette configuration est simple et apporte de la rigidité à l'ensemble mais il faut alors vérifier si les conditions de service n'entraînent pas des contraintes mécaniques trop élevées. Cela va dépendre essentiellement des matériaux utilisés, du type de fixation entre parois et de la température utilisée lors de la régénération si on est dans le cas d'un procédé TSA. Cette dernière est fonction des adsorbants utilisés, du débit de régénération disponible et du taux résiduel d'impuretés dans l'adsorbant retenu pour le dimensionnement. Avec une température de régénération de 60 à 90°C par exemple, une telle configuration peut être possible. Elle sera moins évidente à mettre en œuvre avec des températures de 150 à 250°C.

Inversement, cette solution simple à mettre en œuvre pourra avantageusement être retenue dans le cas d'un lit de garde ou d'un PSA quasi-isobare qui fonctionnent à température pratiquement constante.

On notera que l'on n'a représenté par souci de simplification qu'un lit unique d'adsorbant. Dans la majorité des cas, il existera de chaque côté, au moins une paroi poreuse intermédiaire destinée à séparer deux -ou plus- adsorbants distincts.

Pour les problèmes éventuels liés à la température, il peut être nécessaire de donner un degré de liberté pour autoriser des mouvements verticaux aux parois verticales poreuses maintenant les adsorbants.

Ainsi, selon d'autres modes de réalisation, l'adsorbeur est réalisé de telle façon que les parois verticales (H'*L') des volumes adsorbant sont fixées de façon étanche en haut à la paroi supérieure de l'enveloppe de l'adsorbeur et en bas à un fond plein - ou plancher- allant de la paroi externe d'un volume adsorbant à la paroi externe de l'autre volume comme représenté sur la coupe 4.b.

On peut alors noter qu'il existe un espace entre ledit fond plein et la paroi inférieure de l'enveloppe de l'adsorbeur formant un volume libre additionnel V2c en communication fluidique avec les 2 volumes libres latéraux (V4 et V5) et participant à former le volume libre de l'adsorbeur.

Dans une configuration inverse (coupe 4.c), les parois verticales (H'*L') des volumes adsorbant sont fixées de façon étanche en haut à un fond plein - ou plafond- allant de la paroi externe d'un volume adsorbant à la paroi externe de l'autre volume et en bas à la paroi inférieure de l'enveloppe de l'adsorbeur et il existe alors un espace entre ledit plafond et la paroi supérieure de l'enveloppe de l'adsorbeur formant un volume libre additionnel V2d en communication fluidique avec les 2 volumes libres latéraux (V4 et V5) et participant à former le volume libre de l'adsorbeur.

Enfin, selon un autre mode de réalisation (4.d), qui ne fait pas partie de l'invention, les parois verticales (H'*L') des volumes adsorbant sont fixées de façon étanche en haut et en bas à des fonds pleins - respectivement plafond et plancher - allant de la paroi externe d'un volume adsorbant à la paroi externe de l'autre volume et en bas à la paroi inférieure de l'enveloppe de l'adsorbeur. Dans ce cas, il existe un espace entre ledit plafond et la paroi supérieure de l'enveloppe de l'adsorbeur et entre ledit plancher et la paroi inférieure de cette même enveloppe formant un volume libre additionnel en communication fluidique avec les 2 volumes libres latéraux (V4 et V5) et participant à former le volume libre de l'adsorbeur.

La tenue mécanique de la partie interne dans l'enveloppe peut être améliorée par des supports, par exemple en partie basse, ou des systèmes de suspension, par exemple en partie haute. Ces moyens de maintien peuvent présenter une certaine souplesse pour accompagner les mouvements éventuels liés aux dilatations et contractions thermiques qui ont été évoquées précédemment. Lesdits moyens peuvent être préférentiellement ponctuels ou, du moins, discontinus et ne pas empêcher le passage de fluides d'une zone dans l'autre.

De même, différentes configurations existent quant aux parois latérales (H'*I') de la pièce interne.

Selon une première réalisation, au moins d'un côté, les extrémités latérales des parois verticales des volumes adsorbant sont fixées sur toute leur hauteur (H'), de façon étanche, aux parois latérales (H*I) de l'enveloppe de l'adsorbeur.

Selon une seconde réalisation, au moins d'un côté, les extrémités latérales des parois verticales des volumes adsorbant sont fixées sur toute leur hauteur (H'), de façon étanche, à une plaque pleine (H'*I').

Une série de coupes longitudinales sont schématisées sur la [Fig. 5]. La partie interne représentée arbitrairement en trait épais, est supposée fixée à l'enveloppe à la partie supérieure et avoir par contre son propre plancher. La coupe 5.A montre une partie interne accolée à l'enveloppe par ses deux côtés latéraux, 5.B par un seul côté, l'autre étant fermé par un fond plat et 5.C, une partie interne possédant deux fonds propres.

Comme précédemment, il existe un espace entre chaque plaque pleine fixée à la partie interne et la paroi latérale adjacente de l'enveloppe de l'adsorbeur formant un volume libre additionnel en communication fluidique avec les 2 volumes libres latéraux (V4 et V5) et participant à former le volume libre de l'adsorbeur.

Ces volumes libres permettent la circulation des fluides et favorisent un bon équilibrage entre les débits allant sur chacune des 2 masses adsorbantes. En complément, ces volumes libres peuvent permettre de loger des systèmes de distribution très efficace permettant une répartition quasi parfaite de tous les flux à travers les adsorbants. Un exemple de ce type de dispositif sera donné plus loin.

Selon une variante préférentielle, les volumes V2 et V3 renfermant la masse adsorbante comportent sur toute la longueur de leur extrémité supérieure un système destiné à éviter la pollution potentielle locale du fluide épuré.

En effet, la circulation des fluides étant horizontale dans les masses adsorbantes, on retrouve certaines des contraintes propres aux adsorbeurs radiaux, et en particulier le fait qu'il faut éviter la percée prématurée des impuretés en partie haute de l'adsorbeur. Ladite percée peut provenir d'un bipasse ou d'un sur débit de gaz local et/ou d'un défaut de régénération.

Le bipasse peut quant à lui avoir son origine dans le tassement de l'adsorbant. Ces problèmes sont bien connus de l'homme de l'art et on pourra appliquer ici des solutions déjà développées. En particulier, l'utilisation d'adsorbeur parallélépipédique simplifie de par sa géométrie, la mise en œuvre des solutions imaginées pour les lits radiaux (zone morte remplie d'une hauteur suffisante d'adsorbant, système équivalent aux cônes...). A noter à nouveau, que le remplissage est également simplifié et qu'il est aisé ici d'obtenir un remplissage en pluie, dense et homogène limitant à la fois le tassement et les risques d'inhomogénéité de densité dans les lits. Du fait de la géométrie simple, on pourra par exemple utiliser une baudruche gonflée à une pression supérieure à P1, formant étanchéité au-dessus de la surface libre des adsorbants. Il pourra s'agir aussi d'une membrane appliquée en permanence sur la surface libre des adsorbants par une légère surpression par rapport à la pression de fonctionnement. Cette surpression peut provenir d'un fluide, par exemple d'air instrument, ou d'un matériau pesant. Là encore, il conviendra d'adapter les solutions développées pour les adsorbeurs radiaux des unités de production d'oxygène par adsorption et dont on peut trouver une description dans la littérature ou les brevets déposés.

Compte tenu de la géométrie adopté pour l'adsorbeur, le procédé selon l'invention sera tel que d'une part le volume central V1 de la partie interne et d'autre part le volume libre de l'enveloppe, constitué de V4 et V5, disposent de moyens permettant d'introduire et d'extraire les différents fluides en circulation dans l'adsorbeur (gaz à épurer, gaz traité destiné à l'unité de séparation cryogénique, gaz de régénération issu de cette même unité, très généralement de l'azote basse pression).

Plus précisément, l'agencement de la partie interne dans l'enveloppe avec ses fonds plats éventuels, et la disposition des moyens permettant d'introduire et d'extraire les différents fluides en circulation dans l'adsorbeur impose que la circulation desdits fluides entre entrée et sortie dudit adsorbeur ne se fasse qu'à travers les masses adsorbantes et ce, de façon horizontale.

Comme dans tous les adsorbeurs devant éliminer d'un fluide la quasi-totalité des impuretés, il convient de s'assurer que les liaisons entre éléments sont étanches aux fluides en adoptant les technologies appropriées (soudage, brides, joints...).

Selon un arrangement préférentiel, le flux à traiter entre via les volumes V4 et V5 et une fois épuré sort via le volume V1 et en conséquent, en fonctionnement de type TSA, le gaz de régénération entre généralement via le volume V1 et sort via les volumes V4 et V5. L'intérêt de cet arrangement vient du procédé TSA tel qu'il est mis en œuvre actuellement au moins dans les unités d'épuration d'air à l'amont des unités de séparation cryogénique. Sans vouloir rentrer ici dans les détails, il convient de savoir que dans ce type d'unité, il est habituel lors de la régénération de n'entrer que la quantité de chaleur strictement nécessaire à la désorption des impuretés de sorte que le front de chaleur ne sorte pas de l'adsorbant. On pourra par exemple se référer à cet égard au document EP 1080 773 pour des explications plus complètes sur la régulation du temps de chauffage. Cela signifie que la totalité (ou la quasi-totalité) de l'enveloppe extérieure reste à une température proche de celle du gaz entrant et que seule la partie interne voit passer le front de chaleur. Dans les configurations où une face de la partie interne est accolée à la paroi de l'enveloppe ou en est très proche, il pourra être intéressant pour limiter les transferts thermiques d'utiliser un moyen d'isolation. Celui-ci pourra être côté partie interne, et/ou côté enveloppe et/ou éventuellement entre partie interne et enveloppe. Une telle isolation ne sera pas toujours nécessaire, en particulier si l'on dispose d'un débit important de gaz de régénération. On pourra alors se contenter d'une température de régénération sensiblement inférieure à 100°C, de l'ordre de 50 à 80°C. Dans ce cas, les pertes thermiques seront naturellement faibles et les contraintes thermiques liées aux dilatations limitées. A l'inverse, l'utilisation de températures de régénération de 150°C et plus amènera à étudier plus en détail les contraintes qui en résultent. Suivant la localisation de l'entrée du gaz à épurer, et en particulier si celui-ci a été sensiblement refroidi pour faciliter l'adsorption des impuretés, il conviendra éventuellement d'isoler certaines parties de l'adsorbeur pour conserver cet avantage.

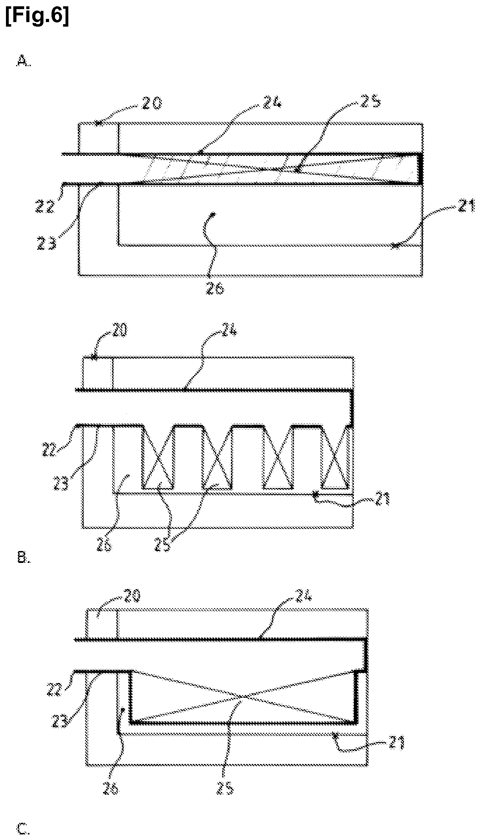

Selon une variante préférentielle, le volume central V1 de la partie interne comprend un filtre permettant de traiter le gaz épuré avant de le diriger vers l'unité aval. Ce filtre sera préférentiellement autonettoyant c'est-à-dire qu'il sera traversé à contre-courant par le gaz de régénération (cas des TSA, PSA) qui décollera les poussières éventuellement arrêtées lors de l'étape précédente. Une purge existe alors généralement en point bas permettant d'évacuer périodiquement lesdites poussières. Ce filtre peut être réalisé de nombreuses manières. En reprenant l'arrangement de la [Fig.5B], on a représenté sur la [Fig. 6] quelques-unes de ces possibilités. Il s'agit de coupes au niveau du plan médian de symétrie de l'adsorbeur. Le repère 20 correspond à l'enveloppe, 21 à la partie interne, 22 à la tubulure de sortie du gaz épuré et d'entrée du gaz de régénération, 23 à la partie de cette tubulure qui traverse de façon étanche le volume libre de l'enveloppe, 24 à la partie de cette tubulure appartenant à la partie interne et 25 la ou les zones de filtration.

Tubulure et filtre ont été représentés en traits épais. La section de la tubulure peut être de forme quelconque (ronde, triangulaire, rectangulaire...).

Sur la [Fig.6A] c'est la tubulure elle-même qui traverse le volume libre V1 26 qui fait office de filtre. Dans cette zone, elle est par exemple perforée et entourée d'une toile permettant une filtration à 50 microns. Il peut également s'agir d'un filtre du commerce fixé dans le prolongement de la tubulure qui s'arrête alors à son débouché dans le volume V1. La tubulure, ou le filtre du commerce, peut avoir un garnissage interne de type conique pour mieux répartir les fluides sur toute leur longueur.

Dans le cas de la [Fig.6B], on utilise une pluralité de filtres du commerce (25) fixés à la tubulure 24. Cela peut permettre d'améliorer la distribution des fluides à travers les masses adsorbantes en répartissant dans le volume libre V1 les points d'injection des fluides. En fin dans la [Fig. 6C], on associe un système performant de distribution de fluide à une filtration. On notera que l'on peut installer un tel système de distribution indépendamment de la fonction filtration. Il peut s'agir de 2 parois perforées installées de part et d'autre du plan vertical médian, dans le volume libre V1 et à une certaine distance des parois poreuses maintenant l'adsorbant. En créant une perte de charge additionnelle, ce système peut permettre une distribution quasi parfaite du gaz dans les masses adsorbantes. Il est utilisé dans l'exemple retenu en fin de document.

Dans une configuration encore préférentielle, les moyens d'introduction et d'extraction des fluides des volumes V1, V4 et V5 se trouvent sur une même face (H*I) de l'enveloppe parallélépipédique de l'adsorbeur. Cela permet de regrouper toutes les entrées et sorties de l'adsorbeur afin de faciliter les raccordements avec les équipements extérieurs à l'adsorbeur lui-même (vannes, échangeur...).

La [Fig.7] illustre une telle implantation. On retient à nouveau l'arrangement de la [Fig. 5.B], à savoir une partie interne accolée à l'enveloppe par sa face supérieure et par un côté, avec une simple tubulure pénétrant dans le volume libre V1 comme figuré en 6.a. On conserve les mêmes références que celle de cette coupe. Sur la coupe 7.a selon le plan médian vertical de l'adsorbeur, le flux à épurer arrive par la tubulure 27, pénètre dans l'enveloppe de l'adsorbeur. Le fond 28 de la partie interne fait office de déflecteur et répartit le flux de gaz dans le volume libre 29 compris entre la paroi de l'enveloppe et ledit fond. La [Fig. 7.B] schématise une vue de dessus et illustre la circulation des fluides dans l'adsorbeur. Après avoir circulé dans le volume libre 29, le gaz à épurer pénètre dans les 2 volumes libres V4 et V5 repérés 30, traverse les parois poreuses de maintien de l'adsorbant, puis les masses adsorbantes, ressort à travers les parois poreuses centrales, pénètre dans la tubulure d'évacuation 22 et sort de l'adsorbeur.

Compte tenu des faibles pressions mises en jeu dans l'épuration et dans certains cas des températures restant proches de l'ambiante, les matériaux utilisés pour le TSA peuvent être variés. Il s'agira essentiellement de matériaux métalliques (acier carbone, acier inox, aluminium...) et/ou polymériques. Dans certaines parties, des matériaux à faible dilatation thermique, comme l'INVAR, pourront être utilisés. La construction sera faite entièrement en atelier, seuls les raccordements des différents fluides se faisant sur site. Le remplissage des adsorbants se fera préférentiellement également en atelier.

Un tel adsorbeur peut contenir jusqu'à de l'ordre de 50 m3 d'adsorbant. D'un point de vue hydraulique, la section de passage réservé au gaz permet de traiter entre 20000 et 100 000 Nm3/h environ selon les caractéristiques des adsorbants retenus (forme, diamètre équivalent, taux de vide..) et les pertes de charge admissibles. Pour certaine application comme la capture du CO2, on envisage de mettre en œuvre des volumes d'adsorbant sensiblement plus élevés et de traiter des débits plus importants. Plutôt que d'utiliser un adsorbeur de taille plus importante difficilement transportable, il sera préférable de mettre en œuvre une pluralité d'adsorbeurs selon l'invention. Ces adsorbeurs pourront fonctionner en parallèle selon un cycle TSA classique (par exemple 6 en adsorption et 6 en régénération) ou de façon plus complexe, de manière à avoir par exemple toujours un adsorbeur en phase de chauffage...

L'exemple suivant va illustrer l'invention telle qu'elle vient d'être décrite. On va s'intéresser à un adsorbeur de grande taille pour lequel on a cherché à maximiser le volume d'adsorbant en utilisant des dispositifs de distribution du gaz en entrée et sortie pour réduire à contrario le volume nécessaire à une bonne répartition du fluide à travers la masse adsorbante.

Il concerne un lit de garde destiné à arrêter en particulier de faibles traces d'hydrocarbures lourds de type composés cycliques dans un flux de gaz carbonique pouvant atteindre quelques dizaines de milliers de Nm3/h. La pression est de l'ordre de 1.15 bar abs. L'adsorbant utilisé est du charbon actif sous forme de bâtonnet. Pour minimiser les pertes de charge et maximiser la durée de fonctionnement par charge d'adsorbant, on a retenu l'adsorbeur de taille maximale selon l'invention c'est-à-dire encore compatible avec le conteneur ISO de grande taille. On rappelle que dans ce cas, il n'y a pas de régénération in situ et que la charge polluée est périodiquement remplacée par une charge neuve.

Suivant l'invention, l'adsorbeur se présente sous la forme d'un parallélépipède de longueur L égale à 12 m environ, de hauteur H égale à 3 m environ, et de largeur l égale à 3.00 m environ. La [Fig. 8] montre une coupe en perspective dudit adsorbeur. Au centre, on retrouve le volume V1 destiné à la distribution des fluides 50. Ce volume est divisé lui-même en 3 sous volumes séparés par une paroi perforée 51 de part et d'autre de la zone centrale. Ces parois perforées permettent de distribuer le flux gazeux sur toute la longueur et la hauteur de la paroi poreuse 52 maintenant l'adsorbant. Elles sont placées à quelques centimètres des parois poreuses afin de permettre un étalement des veines gazeuses avant d'entrer dans l'adsorbant. Un système d'étanchéité 53 en appui permanent sur l'adsorbant évite les bipasses en partie supérieure dus à un éventuel tassement de l'adsorbant. La masse adsorbante 54 est maintenue en place côté extérieur par la paroi poreuse 55. Une paroi perforée 56 sert à la bonne répartition du flux gazeux. Le gaz circule ensuite dans le volume libre compris entre ladite paroi perforée 56 et la paroi de l'enveloppe 57 de l'adsorbeur. En pratique, la circulation des flux est symétrique par rapport au plan médian de l'adsorbeur 58.

La hauteur utile d'adsorbant est de 2.5 m. La largeur de chaque lit est de 0.9 m environ. Le volume total d'adsorbant est de l'ordre de 54m3. Il faut imaginer aux extrémités de la partie centrale une paroi pleine non représentée qui isole ladite partie interne du volume libre de l'enveloppe extérieure. L'entrée du CO2 impur et la sortie du CO2 épuré se font comme décrit précédemment, en particulier sur les figures 6 et 7.

## Revendications

1. Installation de purification par adsorption d'un flux gazeux comprenant au moins un adsorbeur présentant une enveloppe de forme parallélépipèdique disposée horizontalement et comprenant :
- une entrée et une sortie du flux gazeux,
- deux masses adsorbantes en lit fixe présentant chacune une forme également parallélépipédique dont les faces sont parallèles aux faces de l'enveloppe, et
- un ensemble de volumes permettant que la traversée des deux masses adsorbantes par le flux gazeux s'effectue horizontalement, en parallèle, dans des sens opposés, sur toute la section de chacune des masses adsorbantes et sur toutes leurs épaisseurs,
l'ensemble des volumes comprenant :
a) une partie interne comprenant :
- un premier volume V1 (7) d'introduction et de distribution ou de récupération de fluides ;
- un deuxième volume V2 (8) et un troisième volume V3 (9) comprenant chacun une masse adsorbante et situés de part et d'autre du premier volume V1 ; et
b) une partie libre comprenant deux volumes libres V4 et V5 (11) d'introduction et de distribution ou de récupération de fluides compris de part et d'autre de la partie interne et entre la partie interne et l'enveloppe de l'adsorbeur ;
la partie interne étant disposée de façon symétrique par rapport au plan médian de l'enveloppe de l'adsorbeur,
la partie interne présentant un fond inférieur plein ou un fond supérieur plein et le premier volume V1, le deuxième volume V2 et le troisième volume V3 présentant des parois verticales fixées de façon étanche à la paroi supérieure de l'enveloppe de l'adsorbeur ou au fond supérieur plein et à la paroi inférieure de l'enveloppe de l'adsorbeur ou au fond inférieur plein,
l'ensemble de volumes comprenant, entre la paroi inférieure de l'enveloppe de l'adsorbeur et le fond inférieur plein, un espace en communication fluidique avec les volumes libres V4 et V5,
ou,
l'ensemble de volumes comprenant, entre la paroi supérieure de l'enveloppe de l'adsorbeur et le fond supérieur plein, un espace en communication fluidique avec les volumes libres V4 et V5.

2. Installation selon l'une quelconque des revendications précédentes, **caractérisée en ce que** le deuxième volume V2 et le troisième volume V3 comprennent chacun au moins deux sous-volumes adjacents comprenant des adsorbants différents ; avec l'ensemble des adsorbants disposé de façon symétrique par rapport au plan médian de l'adsorbeur.

3. Installation selon l'une quelconque des revendications précédentes, **caractérisée en ce que** le premier volume V1, le deuxième volume V2 et le troisième volume V3 présentent des parois verticales fixées de façon étanche à au moins une paroi latérale de l'enveloppe de l'adsorbeur.

4. Installation selon l'une des revendications 1 à 2, **caractérisée en ce que** le premier volume V1, le deuxième volume V2 et le troisième volume V3 présentent des parois verticales fixées de façon étanche à au moins une plaque pleine parallèle à une paroi latérale de l'enveloppe de l'adsorbeur.

5. Installation selon la revendication précédente, **caractérisée en ce que** l'ensemble de volumes comprend, entre la plaque pleine et une paroi latérale de l'enveloppe de l'adsorbeur, un espace en communication fluidique avec les volumes libres V4 et V5.

6. Procédé de purification par adsorption d'un flux gazeux mettant en œuvre une installation telle que définie à l'une des revendications précédentes et comprenant :
- une étape de purification du flux gazeux par la traversée en parallèle des deux masses adsorbantes de l'adsorbeur par ledit flux gazeux ; et
- une étape de régénération de l'adsorbeur par la traversée en parallèle des deux masses adsorbantes de l'adsorbeur par un flux de régénération ; ou
- une étape de remplacement d'au moins une partie des deux masses adsorbantes de l'adsorbeur.

7. Procédé selon la revendication précédente, **caractérisé en ce que** l'étape d'épuration est réalisée à une pression comprise entre 0.95 bar abs et 1.2 bar abs, préférentiellement entre 1.0 bar abs et 1.15 bar abs.

8. Procédé selon l'une des revendications 6 ou 7, **caractérisé en ce qu'**il met en œuvre une installation telle que définie dans l'une des revendications 1 à 5 et à l'étape de purification le flux gazeux est introduit dans les deux volumes libres V4 et V5 et le flux gazeux épuré est soutiré du premier volume V1.

9. Procédé selon l'une des revendications 6 ou 7, **caractérisé en ce qu'**il met en œuvre une installation telle que définie dans l'une des revendications 1 ou 5 et à l'étape de purification le flux gazeux est introduit dans l'espace en communication fluidique avec les volumes libres V4 et V5 et le flux gazeux épuré est soutiré du premier volume V1.

10. Procédé selon l'une des revendications 6 à 9, **caractérisé en ce qu'**il met en œuvre une installation telle que définie dans l'une des revendications 1 à 5 et à l'étape de régénération le flux de régénération est introduit dans le premier volume V1 puis soutiré dans les deux volumes libres V4 et V5.

11. Procédé selon l'une des revendications 7, 8 ou 10, **caractérisé en ce qu'**il met en œuvre une installation telle que définie dans l'une quelconque des revendications 1 à 5 et à l'étape de régénération le flux de régénération est introduit dans le volume premier V1 puis soutiré dans l'espace en communication fluidique avec les volumes libres V4 et V5.

## Patentansprüche

1. Anlage zur Reinigung durch Adsorption eines Gasstroms, umfassend mindestens einen Adsorber mit einer quaderförmigen Hülle, die horizontal angeordnet ist und Folgendes umfasst:
• einen Einlass und einen Auslass für den Gasstrom,
• zwei Adsorptionsmassen in einem Festbett, die jeweils ebenfalls eine quaderförmige Form aufweisen, deren Flächen parallel zu den Flächen der Hülle sind, und
• eine Anordnung von Volumina, die es ermöglicht, dass der Durchgang des Gasstroms durch die beiden Adsorptionsmassen horizontal, parallel, in entgegengesetzten Richtungen, über den gesamten Querschnitt jeder der Adsorptionsmassen und über ihre gesamten Dicken erfolgt,
wobei die Anordnung von Volumina Folgendes umfasst:
a) einen inneren Teil, umfassend:
• ein erstes Volumen V1 (7) zur Einleitung und Verteilung oder zur Rückgewinnung von Fluiden;
• ein zweites Volumen V2 (8) und ein drittes Volumen V3 (9), die jeweils eine Adsorptionsmasse umfassen und sich auf beiden Seiten des ersten Volumens V1 befinden;
und
b) einen freien Teil, umfassend zwei freie Volumina V4 und V5 (11) zur Einleitung und Verteilung oder zur Rückgewinnung von Fluiden, die sich auf beiden Seiten des inneren Teils und zwischen dem inneren Teil und der Hülle des Adsorbers befinden;
wobei der innere Teil symmetrisch zur Mittelebene der Adsorberhülle angeordnet ist,
wobei der innere Teil einen vollen unteren Boden oder eine volle obere Decke aufweist und das erste Volumen V1, das zweite Volumen V2 und das dritte Volumen V3 vertikale Wände aufweisen, die dicht mit der oberen Wand der Adsorberhülle oder der vollen oberen Decke und mit der unteren Wand der Adsorberhülle oder dem vollen unteren Boden verbunden sind,
wobei die Anordnung von Volumina zwischen der unteren Wand der Adsorberhülle und dem vollen unteren Boden einen Raum in fluider Kommunikation mit den freien Volumina V4 und V5 umfasst,
oder,
wobei die Anordnung von Volumina zwischen der oberen Wand der Adsorberhülle und der vollen oberen Decke einen Raum in fluider Kommunikation mit den freien Volumina V4 und V5 umfasst.

2. Anlage nach einem der vorhergehenden Ansprüche, **dadurch gekennzeichnet, dass** das zweite Volumen V2 und das dritte Volumen V3 jeweils mindestens zwei benachbarte Teilvolumina umfassen, die unterschiedliche Adsorptionsmittel enthalten; wobei die Gesamtheit der Adsorptionsmittel symmetrisch zur Mittelebene des Adsorbers angeordnet ist.

3. Anlage nach einem der vorhergehenden Ansprüche, **dadurch gekennzeichnet, dass** das erste Volumen V1, das zweite Volumen V2 und das dritte Volumen V3 vertikale Wände aufweisen, die dicht mit mindestens einer Seitenwand der Adsorberhülle verbunden sind.

4. Anlage nach einem der Ansprüche 1 bis 2, **dadurch gekennzeichnet, dass** das erste Volumen V1, das zweite Volumen V2 und das dritte Volumen V3 vertikale Wände aufweisen, die dicht mit mindestens einer vollen Platte parallel zu einer Seitenwand der Adsorberhülle verbunden sind.

5. Anlage nach dem vorhergehenden Anspruch, **dadurch gekennzeichnet, dass** die Anordnung von Volumina zwischen der vollen Platte und einer Seitenwand der Adsorberhülle einen Raum in fluider Kommunikation mit den freien Volumina V4 und V5 umfasst.

6. Verfahren zur Reinigung durch Adsorption eines Gasstroms unter Verwendung einer Anlage nach einem der vorhergehenden Ansprüche und umfassend:
• einen Schritt der Reinigung des Gasstroms durch paralleles Durchleiten des besagten Gasstroms durch die beiden Adsorptionsmassen des Adsorbers; und
• einen Schritt der Regeneration des Adsorbers durch paralleles Durchleiten eines Regenerationsstroms durch die beiden Adsorptionsmassen des Adsorbers; oder
• einen Schritt des Austauschs mindestens eines Teils der beiden Adsorptionsmassen des Adsorbers.

7. Verfahren nach dem vorhergehenden Anspruch, **dadurch gekennzeichnet, dass** der Reinigungsschritt bei einem Druck zwischen 0.95 bar abs und 1.2 bar abs, vorzugsweise zwischen 1.0 bar abs und 1.15 bar abs, durchgeführt wird.

8. Verfahren nach einem der Ansprüche 6 oder 7, **dadurch gekennzeichnet, dass** es eine Anlage nach einem der Ansprüche 1 bis 5 verwendet und im Reinigungsschritt der Gasstrom in die beiden freien Volumina V4 und V5 eingeleitet und der gereinigte Gasstrom aus dem ersten Volumen V1 entnommen wird.

9. Verfahren nach einem der Ansprüche 6 oder 7, **dadurch gekennzeichnet, dass** es eine Anlage nach einem der Ansprüche 1 oder 5 verwendet und im Reinigungsschritt der Gasstrom in den Raum in fluider Kommunikation mit den freien Volumina V4 und V5 eingeleitet und der gereinigte Gasstrom aus dem ersten Volumen V1 entnommen wird.

10. Verfahren nach einem der Ansprüche 6 bis 9, **dadurch gekennzeichnet, dass** es eine Anlage nach einem der Ansprüche 1 bis 5 verwendet und im Regenerationsschritt der Regenerationsstrom in das erste Volumen V1 eingeleitet und dann in die beiden freien Volumina V4 und V5 entnommen wird.

11. Verfahren nach einem der Ansprüche 7, 8 oder 10, **dadurch gekennzeichnet, dass** es eine Anlage nach einem der Ansprüche 1 bis 5 verwendet und im Regenerationsschritt der Regenerationsstrom in das erste Volumen V1 eingeleitet und dann in den Raum in fluider Kommunikation mit den freien Volumina V4 und V5 entnommen wird.

## Claims

1. Installation for purification by adsorption of a gaseous stream comprising at least one adsorber having a parallelepipedal-shaped casing arranged horizontally and comprising:
• an inlet and an outlet for the gaseous stream,
• two adsorbent masses in a fixed bed, each having a parallelepipedal shape as well, with faces parallel to the faces of the casing, and
• a set of volumes allowing the gaseous stream to pass through the two adsorbent masses horizontally, in parallel, in opposite directions, over the entire cross-section of each of the adsorbent masses and over their entire thicknesses,
the set of volumes comprising:
a) an internal part comprising:
• a first volume V1 (7) for introducing and distributing or collecting fluids;
• a second volume V2 (8) and a third volume V3 (9) each comprising an adsorbent mass and located on either side of the first volume V1;
and
b) a free part comprising two free volumes V4 and V5 (11) for introducing and distributing or collecting fluids, located on either side of the internal part and between the internal part and the casing of the adsorber;
the internal part being arranged symmetrically with respect to the median plane of the adsorber casing,
the internal part having a solid bottom floor or a solid top ceiling and the first volume V1, the second volume V2 and the third volume V3 having vertical walls fixed in a sealed manner to the upper wall of the adsorber casing or to the solid top ceiling and to the lower wall of the adsorber casing or to the solid bottom floor,
the set of volumes comprising, between the lower wall of the adsorber casing and the solid bottom floor, a space in fluid communication with the free volumes V4 and V5,
or,
the set of volumes comprising, between the upper wall of the adsorber casing and the solid top ceiling, a space in fluid communication with the free volumes V4 and V5.

2. Installation according to any one of the preceding claims, **characterized in that** the second volume V2 and the third volume V3 each comprise at least two adjacent sub-volumes comprising different adsorbents; with the entire set of adsorbents arranged symmetrically with respect to the median plane of the adsorber.

3. Installation according to any one of the preceding claims, **characterized in that** the first volume V1, the second volume V2 and the third volume V3 have vertical walls fixed in a sealed manner to at least one side wall of the adsorber casing.

4. Installation according to one of claims 1 to 2, **characterized in that** the first volume V1, the second volume V2 and the third volume V3 have vertical walls fixed in a sealed manner to at least one solid plate parallel to a side wall of the adsorber casing.

5. Installation according to the preceding claim, **characterized in that** the set of volumes comprises, between the solid plate and a side wall of the adsorber casing, a space in fluid communication with the free volumes V4 and V5.

6. Process for purification by adsorption of a gaseous stream implementing an installation as defined in any one of the preceding claims and comprising:
• a step of purifying the gaseous stream by passing said gaseous stream in parallel through the two adsorbent masses of the adsorber; and
• a step of regenerating the adsorber by passing a regeneration stream in parallel through the two adsorbent masses of the adsorber; or
• a step of replacing at least a part of the two adsorbent masses of the adsorber.

7. Process according to the preceding claim, **characterized in that** the purification step is carried out at a pressure between 0.95 bar abs and 1.2 bar abs, preferably between 1.0 bar abs and 1.15 bar abs.

8. Process according to one of claims 6 or 7, **characterized in that** it implements an installation as defined in one of claims 1 to 5 and in the purification step the gaseous stream is introduced into the two free volumes V4 and V5 and the purified gaseous stream is withdrawn from the first volume V1.

9. Process according to one of claims 6 or 7, **characterized in that** it implements an installation as defined in one of claims 1 or 5 and in the purification step the gaseous stream is introduced into the space in fluid communication with the free volumes V4 and V5 and the purified gaseous stream is withdrawn from the first volume V1.

10. Process according to one of claims 6 to 9, **characterized in that** it implements an installation as defined in one of claims 1 to 5 and in the regeneration step the regeneration stream is introduced into the first volume V1 then withdrawn into the two free volumes V4 and V5.

11. Process according to one of claims 7, 8 or 10, **characterized in that** it implements an installation as defined in any one of claims 1 to 5 and in the regeneration step, the regeneration stream is introduced into the first volume V1 then withdrawn into the space in fluid communication with the free volumes V4 and V5.
